# FASCICULE DE BREVET EUROPEEN

(11) **EP 0 512 470 B1**
(45) Date de publication et mention de la délivrance du brevet: **24.04.1996**
(21) Numéro de dépôt: 92107548.7
(22) Date de dépôt: 05.05.1992
(51) Int. Cl.: A47J 31/40

(54) **Procédé d'extraction de cartouches fermées et dispositif pour sa mise en oeuvre**
Verfahren zur Herstellung von Getränken mittels geschlossener Portionspackungen und Gerät zur Durchführung dieses Verfahrens
Method of producing beverages using sealed cartridges and apparatus for carrying out this method

(30) Priorité: 08.05.1991 EP 91107462; 08.07.1991 EP 91111318; 28.01.1992 EP 92101389
(43) Date de publication de la demande: 11.11.1992
(73) Titulaire: SOCIETE DES PRODUITS NESTLE S.A., CH-1800 Vevey (CH)
(72) Inventeur: Fond, Olivier, CH-1400 Yverdon (CH); Lavanchy, Gérard, CH-1008 Prilly (CH); Yoakim, Alfred, CH-1814 La Tour-De-Peilz (CH)

(56) Documents cités:
- EP-A- 0 070 403
- EP-A- 0 242 556
- DE-U- 7 430 109
- DE-U- 8 908 315
- FR-A- 1 537 031
- FR-A- 2 033 190
- FR-A- 2 322 796
- FR-A- 2 373 999
- US-A- 4 921 712

## Description

L'invention concerne un procédé d'extraction de cartouches contenant au moins une substance pour la préparation d'une boisson dans un porte-cartouches, ladite cartouche comprenant une face d'extraction de préférence plane. L'invention concerne en outre le dispositif pour la mise en oeuvre de ce procédé et le porte-cartouche.

L'utilisation de capsules pour la préparation d'une boisson, surtout dans le domaine des cafés type espresso extraits sous pression, est motivée par plusieurs raisons: hygiène, conservation optimale du café, facilité d'usage, meilleure maîtrise de la qualité du café obtenu et bonne reproductibilité des conditions d'extraction. Parmi l'ensemble des capsules disponibles, seules les capsules fermées, s ouvrant sous l'effet de la pression d'eau injectée, répondent plus complètement aux arguments énoncés ci-dessus. Ces capsules se distinguent par leur système d'ouverture.

Certaines ont, par construction, des zones affaiblies qui se déchireront préférentiellement sous l'effet de la pression. Cette solution présente le désavantage d'augmenter la complexité et le prix de la capsule car les matières employées doivent être traitées de manière très précise pour que l'ouverture soit correcte et reproductible. De plus, elles doivent comporter un filtre voisin de la membrane, suffisamment résistant pour retenir le marc de café au cours de l'extraction.

D'autres sont employées selon un procédé dans lequel, dans un premier temps sont créées par action mécanique des zones d'affaiblissement dans la membrane inférieure, puis, dans un deuxième temps, l'ouverture de la capsule se fait sous l'action de la pression d'eau injectée par rupture des zones affaiblies. Un tel procédé, décrit dans les brevets FR 1537031 et FR 2033190, présente de nombreux désavantages.

Le dispositif est complexe à réaliser car le corps inférieur est pourvu d'une plaquette mobile, poussée par un ressort, pourvue d'une multitude de trous et de saillies, qui s'enfonce au fur et à mesure de la mise en place de la capsule afin de créer la cavité destinée à recevoir la capsule à extraire.

La formation de cette cavité est une opération délicate car elle est dépendante de la force du ressort; s'il est trop fort, la cavité sera trop petite et la capsule risque de s'ouvrir déjà complètement et s'il est trop faible, la cavité sera trop large, empêchant tout affaiblissement préalable de la membrane.

En conséquence, les deux actions principales, à savoir d'abord affaiblissement de la membrane par action mécanique puis ouverture de la capsule sont difficiles à contrôler.

Aucune mention explicite n'est faite de la propreté du système, plus précisement au sujet des entraînements de matière à travers les ouvertures.

D'autre part, on a pu observer que la simple déchirure de la face inférieure d'une cartouche ne suffisait pas à garantir l'écoulement régulier d'un fluide à travers celle-ci.

De plus, les organes, destinés à affaiblir la membrane inférieure, sont des éléments taillants ou perforants qui peuvent être dangereux et blesser l'opérateur en cas de mauvaise manipulation.

Enfin, la pression maximum du fluide étant déjà atteinte lors de l'ouverture de la cartouche, la pression d'extraction de la substance sera égale ou plus faible que la pression d'ouverture, ce qui est assez restrictif en termes d'usage, puisque cela ne permet pas l'extraction de café moulu sous la haute pression désirable.

Le but de la présente invention est de fournir un procédé et un dispositif dans lesquels tous les inconvénients mentionnés ci-dessus ont été éliminés et dans lequel un grand soin est apporté à la qualité du produit obtenu, à la régularité de l'écoulement et à la propreté du système, afin d'éviter toute dispersion de matière en dehors de la cartouche.

L'invention est contenue dans la revendication principale de procédé et dans les revendications de dispositif 6 et 7.

L'invention concerne un procédé dans lequel on injecte dans la cartouche un mélange d'eau et d'air à une pression comprise entre 1 et 20 bar, de manière à déformer la face d'extraction de la cartouche contre une surface en relief du porte-cartouche comportant des éléments en relief et des creux, ladite face d'extraction se déchirant à l'emplacement de ces éléments en relief et/ou de ces creux en atteignant sa tension de rupture, pour permettre ensuite l'évacuation du liquide après extraction du café sous une pression de 1 à 20 bars.

Le procédé est également caractérisé par la valeur élevée de la pression d'extraction, car sa valeur maximum n'est pas obligatoirement atteinte lors de l'ouverture de la cartouche, mais peut l'être plus tard au cours de l'extraction, lorsque la perte de charge à travers le lit de café a atteint son maximum.

Par cartouche fermée, on entend une cartouche dont la face d'extraction est fermée, avant ladite extraction.

Le procédé sera mieux compris par la description de ses phases successives, pouvant être réalisées, dans le cas particulier de son utilisation pour du café, à partir de machines espresso connues du commerce et comportant des moyens pour injecter de l'eau sous pression et un porte-cartouche, voire support de porte-cartouche et un porte-cartouche.
- Dans un premier temps, la cartouche est mise en place dans le porte-cartouche, sa face d'extraction prenant appui sur la face en relief dudit porte-cartouche sans toutefois que des impressions plus ou moins profondes ou déformations analogues ne soient réalisées dans l'épaisseur de la face d'extraction de ladite cartouche.
- Dans un deuxième temps, l'ensemble porte-cartouche muni de la cartouche est mis en place sur la machine,
- Dans un troisième temps, l'eau mélangée ou non à de l'air est injectée sous une pression de 1 à 20 bar de préférence de 1 à 10 bar dans la cartouche dont la face d'extraction se plaque, en se déformant par l'effet de la pression, contre le relief du porte-cartouche muni des orifices d'évacuation de l'infusion. Cette phase assure de plus un temps de prémouillage du café avant extraction.

L'air est celui présent dans les conduites de ladite machine qui se mélange à l'eau lors de la mise en route du processus d'extraction.
- Dans un quatrième temps, la matière constituant ladite face d'extraction atteignant sa tension de rupture, la déchirure s'amorce à l'emplacement des parties saillantes du relief et/ou dans les parties creuses, soit les cavités (creux) formées entre lesdites parties en relief. Selon la forme du relief, la déchirure peut aussi se prolonger dans les deux zones mentionnées précédemment. Les parties ainsi fracturées de la face d'extraction libérée de sa tension viennent s'appliquer précisément contre le relief avec pour effet d'agrandir les ouvertures réalisées, favorisant l'écoulement ultérieur du fluide d'extraction, mais de telle manière qu'aucune dispersion de matière ne se fasse en dehors de la cartouche. La pression interne de la cartouche chute partiellement, mais cette décompression momentanée est limitée car le flux de fluide qui s'échappe de la cartouche est laminé tant par les faibles interstices constitués par les lèvres de la matière déchirée de la face d'extraction s'appuyant sur le relief que par les orifices d'écoulement pratiqués dans l'élément en relief. L'écoulement est ainsi parfaitement contrôlé, excluant notamment tout déplacement intempestif de la phase solide du contenu de la cartouche qui pourrait obstruer les orifices d'écoulement et gêner ultérieurement la régularité et la reproductibilité du processus d'extraction.
- Dans un cinquième temps, le café est extrait sous une pression de 1 à 20 bar, cette pression étant volontairement et essentiellement liée à la perte de charge à travers le lit de café mouillé et par là-même compacté.

Des ouvertures complémentaires de la face d'extraction peuvent éventuellement se produire lorsque la pression d'extraction atteint des valeurs élevées.
- Dans un dernier temps, le porte-cartouche est libéré et la cartouche, préalablement libérée par les moyens auxiliaires décrits plus loin, est évacuée par simple retournement du porte-cartouche.

Selon une première variante du procédé, les déchirures sont produites dans la partie centrale des cavités (creux) formées entre les parties saillantes d'un élément en relief lorsque la matière atteint sa tension de rupture à la flèche de sa déformation. Cet élément en relief surmonte une grille percée d'orifices de faibles dimensions. Les déchirures se prolongent à l'intérieur des cavités, au-dessus de la zone comportant les orifices d'évacuation. La matière de la face d'extraction, ainsi libérée, peut alors venir étroitement épouser la forme du relief, sous l'effet de la poussée, par l'intérieur, du marc de café soumis à l'injection d'eau en amont du lit. Cette déformation, accompagnée d'un déplacement de matière, engendre un agrandissement des déchirures réparties régulièrement sur la face d'extraction de la cartouche. Ces déchirures permettent ainsi l'écoulement du liquide extrait à travers le lit de café, sans toutefois occasionner ni une dispersion du marc en dehors de la cartouche, puisque ce marc a été préalablement compacté sous l'effet de la pression d'eau, ni son passage à travers la grille puisque ses orifices sont de trop petites dimensions pour laisser ce marc s'échapper.

Selon une deuxième variante préférée de mise en oeuvre du procédé, l'amorce de déchirure de la face d'extraction de la cartouche peut se faire au niveau des éléments en relief puis se prolonger dans le centre des cavités (creux) formées par lesdits éléments. Ceci est obtenu en accentuant le relief.

Selon une troisième variante du procédé, l'ouverture de la face d'extraction se fait par obtention de la tension de rupture à l'emplacement d'éléments en relief éventuellement associés à des éléments complémentaires, qui n'ont pas vocation à déchirer la face d'extraction de la cartouche mais à favoriser l'écoulement, tout en garantissant la propreté du système.

L'extrait de café parvient à passer entre les parties déchirées et déformées de la face d'extraction de la cartouche jusqu'à des orifices d'écoulement, car ces parties déchirées ne peuvent se plaquer de manière parfaitement étanche contre le relief du fait d'une certaine rigidité relative due à leurs dimensions assez réduites.

Le nombre des déchirures, réalisées dans la face d'extraction de la cartouche, se situe préférentiellement entre 4 et 50.

La description donnée ci-après à titre d'exemple d'application au café torréfié et moulu n'est pas limitative, le procédé étant applicable à tout produit ou mélange de produits enfermé dans une cartouche tel du thé, du café soluble, un mélange de café moulu et de café soluble, un produit chocolaté ou un potage et destinés à l'obtention de boissons ou d'aliments sous forme d'infusions.

La cartouche utilisée pour la mise en oeuvre du procédé selon l'invention peut être d'un type semblable à celles faisant l'objet des demandes de brevet européen No 91'107'650.3, 91'111'213.4 et 91'111'214.2.

La forme est de préférence tronconique ou hémisphérique, mais elle peut aussi être cylindrique, la section n'étant pas obligatoirement circulaire. Sa plus grande dimension est usuellement comprise entre 25 et 60 mm pour une hauteur de 10 à 30 mm dans le cas du café.

La face d'extraction n'est pas obligatoirement plane, ni obligatoirement située dans un plan horizontal. D'autres formes ou orientations peuvent être préférées pour la commodité des procédés de fabrication ou de mise en oeuvre.

L'invention concerne en outre le dispositif pour la mise en oeuvre du procédé. Ce dispositif comprend un organe d'injection d'eau, un support de porte-cartouches amovible maintenu sous l'organe d'injection d'eau par des moyens de fixation, une pièce annulaire avec un logement intérieur dont la forme épouse sensiblement la forme extérieure de la cartouche à extraire, et un porte-cartouche disposé dans le support de porte-cartouche et comportant des éléments en relief et en creux sur une grille d'écoulement, la partie inférieure de la pièce annulaire coopérant avec le pourtour du porte-cartouche pour assurer le maintien de la cartouche et l'étanchéité lors de l'extraction. Ce dispositif est utilisé pour les cartouches tronconiques.

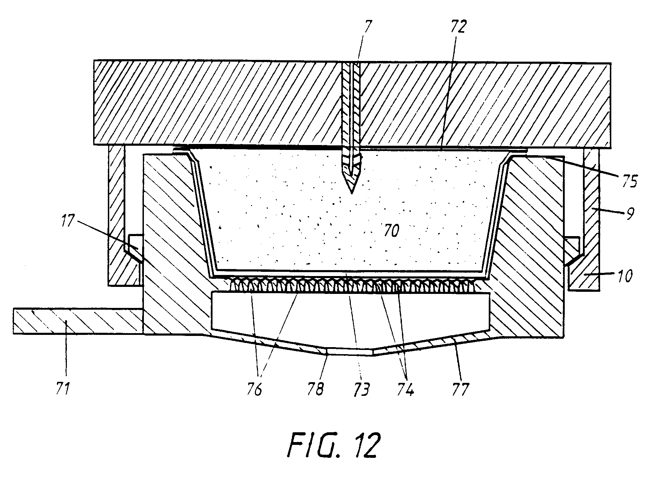

Pour les cartouches tronconiques inversées (Fig. 12) le dispositif comprend un organe d'injection d'eau, un support de porte-cartouche amovible maintenu sous l'organe d'injection d'eau par des moyens de fixation, un porte-cartouche disposé dans le support de porte-cartouches, la forme intérieure du porte-cartouche épousant sensiblement la forme extérieure de la cartouche à extraire et ledit porte-cartouche comportant des éléments en relief et en creux sur une grille d'écoulement, la partie périphérique de l'organe d'injection d'eau coopérant avec le pourtour du porte-cartouche pour assurer le maintien de la cartouche et l'étanchéité lors de l'extraction. L'organe d'injection d'eau peut être une pointe ou un système type douche.

Selon une disposition préférée du dispositif selon l'invention, semblable à celle habituellement employée dans les machines espresso, le support de porte-cartouche peut comporter une poignée et des pattes de serrage, de préférence 2 à 3, prévues pour s'engager sur les rampes correspondantes de la bague de serrage solidaire de la machine constituant les moyens de fixation. Le dispositif est dit à baïonnette. Manipulé à l'aide de sa poignée, il suit un mouvement rotatif ascendant ou descendant.

Selon une autre disposition non représentée, le porte-cartouche peut être intégré à un dispositif mécanique automatisé qui, par des moyens secondaires connus et dont il ne sera pas fait de description détaillée, assure la mise en place de la cartouche dans la pièce annulaire creuse d'extraction, le serrage étanche, puis après infusion, le desserrage et le dégagement de la cartouche usagée. La disposition des pièces respectives est alors modifiée, la face d'extraction pouvant par exemple être disposée selon un plan vertical. Il en est alors de même de la surface en relief et l'injection d'eau peut alors lui être perpendiculaire ou non.

La partie inférieure de la pièce annulaire assure l'étanchéité du confinement lors de l'extraction par pincement de la bordure de forme usuellement circulaire de la cartouche contre le pourtour du porte-cartouche lors de la mise en place de l'ensemble porte-cartouche, support de porte-cartouche et cartouche.

Les éléments en relief combinés à la grille d'écoulement sont saillants ou non, mais ni taillants ni perforants directement. Leur action de déchirure de la face d'extraction de la cartouche n'est rendue possible que parce qu'ils permettent à celle-ci d'atteindre sa tension de rupture lors de la déformation sous la poussée de l'eau et éventuellement de l'air injectés. La disposition des éléments en relief est optimisée afin de permettre une répartition homogène des zones d'écoulement du café d'où meilleure extraction du lit de café et meilleure qualité de l'extrait obtenu.

Après infusion et dégagement du dispositif porte-cartouche et son support, la cartouche et sa face d'extraction conservent leur parfaite intégrité grâce à la répartition des ouvertures: pratiquement aucun déchet de la face d'extraction de la cartouche ne reste accroché au dispositif.

Dans une première forme de réalisation du dispositif, les éléments du relief sont constitués de petites baguettes rectilignes ou légèrement sinueuses ou sous forme d'arcs, fermés ou non, disposées de façon radiale, concentrique, parallèle ou perpendiculaire sur une grille, et présentant des longueurs distinctes. Leur section peut être semi-circulaire ou approximativement trapézoïdale, plus ou moins aplatie, plus ou moins évasée vers le bas. Leurs largeur et hauteur mesurent de 0.5 à 5 mm. Leur nombre peut varier de 4 à 16 selon le diamètre de la grille. Dans le cas de la disposition radiale, ces éléments sont de longueurs variables, selon leur position sur la grille, usuellement de 0,3 à 1 fois le diamètre de la grille. Certains vont jusqu'au centre de la grille d'écoulement, d'autres s'arrêtent à une distance de 3 à 8 mm de ce centre. Cette disposition est justifiées par le fait que s'ils avaient tous la même longueur, ces éléments, en se réunissant au centre, formeraient un cercle plein qui gênerait la déchirure correcte de la face d'extraction de la cartouche dans cette zone centrale morte et qui, de plus, ne permettrait pas une évacuation de l'extrait de café dans ladite zone. Dans le cas de la disposition concentrique, parallèle ou perpendiculaire, la distance entre les éléments saillants est de préférence homogène dans les deux axes du plan horizontal.

En aucun cas des éléments ne peuvent se trouver à une distance inférieure à un minimum défini par l'expérience. En effet, si les éléments étaient trop rapprochés, la matière ne pourrait se déformer correctement et venir épouser les formes du relief. Il s'ensuivrait, lors de la déformation sous la poussée du fluide, un risque de dispersion du marc de café depuis les déchirures opérées dans la face d'extraction jusque dans ces zones dites mortes.

Dans une deuxième forme de réalisation, les éléments du relief peuvent aussi se présenter sous forme de petits prismes, troncs de pyramides, cylindres ou troncs de cône de section polygonale, circulaire ou non.

Dans une troisième forme de réalisation, les éléments en relief forment à leur base des cavités circulaires ou ovoïdes au fond desquelles se trouvent les orifices d'écoulement du café. La profondeur des cavités peut aller de 0.5 à 5 mm. Les parois se présentent sous forme de surfaces courbes sur toute ou partie de leur hauteur ou de faces inclinées formant un angle de 5 à 30° avec la verticale.

Dans ces trois cas, le profil des éléments présente des angles ou arrondis tels que la matière de la face d'extraction de la cartouche ne se déchire pas directement contre les angles, mais en des zones préférentielles préétablies.

Selon une variante d'exécution des trois formes de réalisation ci-dessus, les éléments en relief constituent une pièce en soi disposée sur une grille d'écoulement. Cette grille d'écoulement est préférentiellement constituée d'une plaque métallique (aluminium ou acier inox), mais peut aussi être exécutée en céramique, en plastique ou autre matériau adéquat. Son diamètre est fonction de celui de la face d'extraction de la cartouche et peut varier de préférence entre 20 et 60 mm. Son épaisseur est usuellement de 0,5 à 5 mm, cette épaisseur étant fonction du matériau employé. Elle est percée de nombreux orifices circulaires ou non, d'un diamètre moyen de 0,2 à 0,5 mm et de préférence coniques, le plus souvent évasés vers le bas.

Selon une autre variante, les éléments du relief peuvent faire partie intégrante d'une plaquette percée des orifices de filtration pour l'écoulement du café.

Dans une quatrième forme non représentée de réalisation, la disposition relative des éléments en relief et des orifices d'écoulement est inversée. L'élément en relief est constitué d'une pièce comportant des parties en creux par rapport à sa surface principale et des orifices d'écoulement pratiqués au moins dans la partie saillante. La matière se déchire de manière à découvrir les parties saillantes munies des orifices.

Dans une cinquième forme de réalisation, les éléments en relief sont constitués de pyramides tronquées de 1 à 5 mm de côté et d'une hauteur de 0,5 à 3 mm, préférentiellement orthogonales et disposées selon un quadrillage dont le pas est usuellement compris entre 3 et 7 mm. Les faces, approximativement planes, présentent un angle préférentiel de 10 à 30° avec la verticale. Ces pyramides sont associées à des éléments complémentaires, qui n'ont pas vocation à déchirer la face d'extraction de la cartouche, mais à favoriser l'écoulement du fluide extrait tout en retenant le marc, sous forme par exemple de terrasses de 0,2 à 1 mm de largeur entourant les pyramides et de canaux à la base, larges d'environ 0,7 à 1,5 mm et profonds d'environ 0,3 à 0,8 mm. Ces canaux sont percés d'orifices d'écoulement, au nombre de 12 à 50 de préférence, calibrés à un diamètre de quelques dixièmes de millimètre.

La face supérieure des pyramides sert de surface d'appui lorsqu'on soumet la cartouche à l'effet de la pression. L'amorce de déchirure se fait sur les arêtes de ladite face supérieure des pyramides. Ces arêtes doivent être parfaitement maîtrisées car si elles sont trop tranchantes la pression d'ouverture est trop basse et si elles sont trop arrondies la face d'extraction de la cartouche pourrait être irrégulièrement déchirée au niveau des canaux percés des orifices qui permettent l'écoulement: des dépôts de marc de café pourraient alors s'y produire. La profondeur, la largeur, les angles et l'état de surface de ces canaux doivent donc être optimisés puisqu'il faut une déformation sans déchirure de la matière de la face d'extraction de la cartouche à cet endroit.

L'infusion parvient à passer entre les parties déchirées et déformées de la face d'extraction de la cartouche et les terrasses des pyramides et à couler dans le fond des canaux jusqu'aux orifices, car ces parties déchirées ne peuvent se plaquer de manière parfaitement étanche contre le relief du fait d'une certaine rigidité due à leurs dimensions assez réduites, de la faible largeur des terrasses, de la largeur et profondeur appropriées des canaux, des angles assez vifs des terrasses et des intersections des canaux.

Il est fait remarquer que l'état de surface des parois des pyramides doit être suffisamment lisse pour que le marc de café n'y reste pas collé lorsqu'on retire la cartouche après extraction. Cet effet est également fonction de l'angle de pente des faces latérales des pyramides.

Enfin cet angle est important pour faciliter le dégagement de la cartouche après extraction par simple retournement du porte-cartouche.

Les orifices d'écoulement, de section circulaire ou non, placés de préférence aux intersections des canaux, sont usuellement de forme conique avec élargissement vers le bas pour éviter leur obstruction accidentelle par des particules de marc.

De manière générale, pour toutes les formes d'éxécution, les dimensions et la forme des éléments du relief sont à l'évidence fonction des caractéristiques du produit à infuser.

Ces dimensions et formes sont aussi fonction du matériau constituant la face d'extraction de la cartouche, lequel peut être une feuille d'aluminium ou de plastique ou tout autre complexe approprié.

Ces dimensions et formes seront enfin adaptées aux dimensions et formes de la face d'extraction, non obligatoirement plane.

Enfin, les orifices d'écoulement ne doivent pas causer trop de perte de charge car on veut plutôt obtenir une perte de charge à travers le lit de café. Une perte de charge minimum doit toutefois être consentie au niveau desdits orifices pour obtenir une mise en vitesse de l'infusion afin de l'émulsionner, soit former la mousse typique d'un café espresso.

Le dispositif est également caractérisé par la forme particulière de son dispositif d'étanchéité, propre à favoriser le dégagement de la cartouche après utilisation. Comme déjà mentionné ci-dessus, la bordure usuellement circulaire de la cartouche est pressée entre la partie inférieure de la pièce annulaire entourant la cartouche et le pourtour du porte-cartouche. Si cette bordure est assez épaisse, soit en raison de l'utilisation de matériaux eux-mêmes épais, soit en raison de la surépaisseur due au sertissage des deux parties de la cartouche, on atteint facilement une étanchéité suffisante pour l'extraction du café en serrant à plat avec un effort modéré.

Si au contraire cette bordure est plus mince ou pour s'affranchir des problèmes de tolérance à la fabrication des pièces, il est préféré de prévoir un dispositif particulier propre à mieux assurer cette étanchéité.

Selon une première disposition du dispositif d'étanchéité, la face inférieure extérieure de la pièce annulaire creuse présente un bord conique. Une partie conique correspondante lui fait face à la périphérie du porte-cartouche. Les deux parties s'engagent l'une dans l'autre, pinçant la bordure de la cartouche. Les cônes font chacun un angle de 30 à 60° avec la verticale, cet angle étant préférentiellement différent pour chacun des deux cônes limitant la zone de contact théorique à une arête circulaire.

Selon une deuxième disposition du dispositif d'étanchéité, le bord conique de la pièce annulaire creuse est situé sur la partie inférieure intérieure. La pente des cônes est alors inversée, celui de la périphérie du porte-cartouche s'évasant vers le bas.

Dans une variante de cette deuxième disposition du dispositif d'étanchéité, la zone périphérique du porte-cartouche est munie d'un rebord conique supplémentaire de celui assurant l'étanchéité mais de pente contraire, ayant pour effet de repousser le rebord extrême de la cartouche par élasticité du matériau constituant ledit rebord.

Dans ces deux cas, la partie solidaire du porte-cartouche peut comporter un élément présentant une certaine élasticité, propre à compenser l'effet des tolérances de fabrication.

Dans une troisième disposition du dispositif d'étanchéité, la partie inférieure de la pièce annulaire presse le rebord de la cartouche contre un joint torique élastique placé en périphérie du porte-cartouche.

Ces dispositions sont préférées car, outre la sécurité d'étanchéité qu'elles procurent, elles facilitent, en exploitant l'élasticité résiduelle de son rebord déformé lors du serrage, le dégagement hors relief de la cartouche après extraction.

Dans le cas où le dégagement du support du porte-cartouche se fait par un mouvement rotatif à baïonnette, l'intégrité de la cartouche n'est entamée ni au serrage ni au desserrage du porte-cartouche car il peut être constitué de deux pièces principales pouvant entrer, selon une disposition privilégiée, en rotation l'une par rapport à l'autre: le porte-cartouche comprenant les éléments en relief et les orifices de filtration d'une part, le support du porte-cartouche comportant la poignée, l'orifice de sortie du café et les pattes de serrage diamétralement opposées prévues pour s'engager sur les rampes de serrage de la bague de serrage d'autre part.

Le support du porte-cartouche avec sa poignée subissent un mouvement rotatif ascendant ou descendant qui permet le serrage ou le desserrage de la cartouche. Le porte-cartouche quant à lui ne subit pas la rotation mais uniquement le mouvement ascendant ou descendant dès que ou tant que la cartouche adhère à la pièce annulaire creuse de confinement.

Dans une version préférée de réalisation du dispositif, la pièce avec éléments en relief et en creux et cône d'étanchéité comporte un rebord dont la partie inférieure a la forme d'un anneau sphérique convexe dont le centre de courbure coïncide avec l'axe perpendiculaire au plan de la surface d'appui de la cartouche, ce rebord sphérique prenant librement appui sur un siège présentant une surface concave de même courbure, solidaire du support de porte-cartouche et préférentiellement constitué d'une matière à faible coefficient de glissement. Il en résulte que l'ensemble constitue un assemblage à rotule. La pièce avec éléments en relief peut tourner sur le siège précité tant lors de la mise en place du dispositif muni d'une cartouche que lors de son retrait. De plus, cette pièce peut prendre une légère inclinaison lui permettant de compenser les inévitables tolérances mécaniques des diverses pièces de l'ensemble et venir s'adapter de façon parfaitement étanche à la bordure de la cartouche pressée sur le pourtour inférieur de la pièce assurant le confinement de ladite cartouche.

Une variante de construction prévoit d'intégrer directement le siège sphérique au support du porte-cartouche.

Après l'utilisation de la cartouche, et pour faciliter le dégagement de ladite cartouche, il est usuellement prévu sur la partie extérieure de la pièce annulaire entourant la cartouche une bague maintenue par un ressort, la partie inférieure de ladite bague repoussant la bordure de la cartouche lorsqu'on dégage le porte-cartouche.

Dans le cas où l'étanchéité est assurée par un joint torique, le coefficient de frottement de celui-ci contre la bordure de la cartouche suffit à entraîner ladite cartouche lors du serrage et surtout lors du desserrage sans qu'il y ait risque de déformation de sa face d'extraction contre les éléments en relief. Le support du porte-cartouche ne comporte pas nécessairement de pièce mobile.

Dans le cas où l'étanchéité est assurée par un pinçage conique, la zone périphérique de celle du pinçage est préférentiellement rendue rugueuse de manière à entraîner la cartouche comme décrit ci-dessus. Le même effet est également obtenu au moyen des arêtes des échancrures ou orifices prévus à la périphérie pour les raisons décrites ci-après.

Un cône de réception du café avec canal vertical d'écoulement peut être disposé sous les orifices de filtration du porte-cartouche. Il favorise la formation de la mousse en régularisant et en concentrant le flux de café.

Ce premier cône peut être complété par un second, le premier, proche de la pièce comportant le relief, servant à briser les jets issus des orifices d'écoulement, le second servant alors à canaliser le flux vers l'orifice de sortie final. L'un et l'autre de ces cônes peuvent être munis de perforations, de préférence situées dans leur partie supérieure, les mettant en communication avec l'air extérieur dans le but principalement d'éviter la rétention de liquide après la fin de la phase d'extraction de l'infusion, ces perforations pouvant également, par l'air qu'elles apportent, contribuer à la formation de la mousse.

A la périphérie du porte-cartouche et en dehors de la zone d'appui de la cartouche, on peut prévoir des échancrures ou des orifices permettant à l'eau et au marc de café, provenant du dégorgement éventuel de la cartouche par son ouverture supérieure après extraction, d'être évacués. Cette eau et ce marc sont alors conduits à travers un ou plusieurs orifices complémentaires de celui destiné à l'infusion, sans souiller ce dernier ni la partie supérieure interne du porte-cartouche.

De toute façon, ce dernier écoulement s'effectue après l'extraction du café, lors du dégagement de la cartouche. Le liquide ne s'écoule pas dans la tasse mais usuellement dans le bac avec grille sur laquelle repose la tasse et prévu à cet effet. Cette double sortie évite que le marc, ayant pu rester à l'intérieur du porte-cartouche, ne soit entraîné dans la nouvelle tasse lors de l'extraction de la cartouche suivante.

Un autre cheminement de ces rejets peut aussi être prévu pour les conduire à un réceptacle adéquat.

L'invention concerne en outre le porte-cartouche prévu pour être disposé dans un support de porte-cartouche et comprenant une paroi latérale et un fond, ledit fond comprenant des éléments en relief et des creux sur une grille d'écoulement. Ce porte-cartouche est utilisable aussi bien avec des cartouches tronconiques, hémisphériques ainsi que tronconiques inversées. Dans ce dernier cas, la forme intérieure du porte-cartouche épouse la forme extérieure de la cartouche à extraire.

Selon une forme de réalisation, les éléments en relief et la grille d'écoulement forment un tout, c'est-à-dire une seule pièce et selon une autre forme de réalisation les éléments en relief forment une pièce en soi disposée sur la grille d'écoulement.

Selon la description, le support de porte-cartouche et le porte-cartouche constituent des pièces séparables. On peut également envisager qu'ils ne forment qu'une seule pièce, auquel cas la grille d'écoulement et les éléments en relief sont fixes au-dessus de l'alésage prévu pour l'évacuation du café.

Il est bien entendu que tout ce qui a été dit ci-dessus en relation avec le dispositif selon l'invention et qui concerne les éléments en relief, la grille d'écoulement, le dispositif d'étanchéité du porte-cartouche reste également valable pour le porte-cartouche sans qu'il soit besoin de répéter la description y relative.

La suite de la description est faite en référence aux dessins sur lesquels:

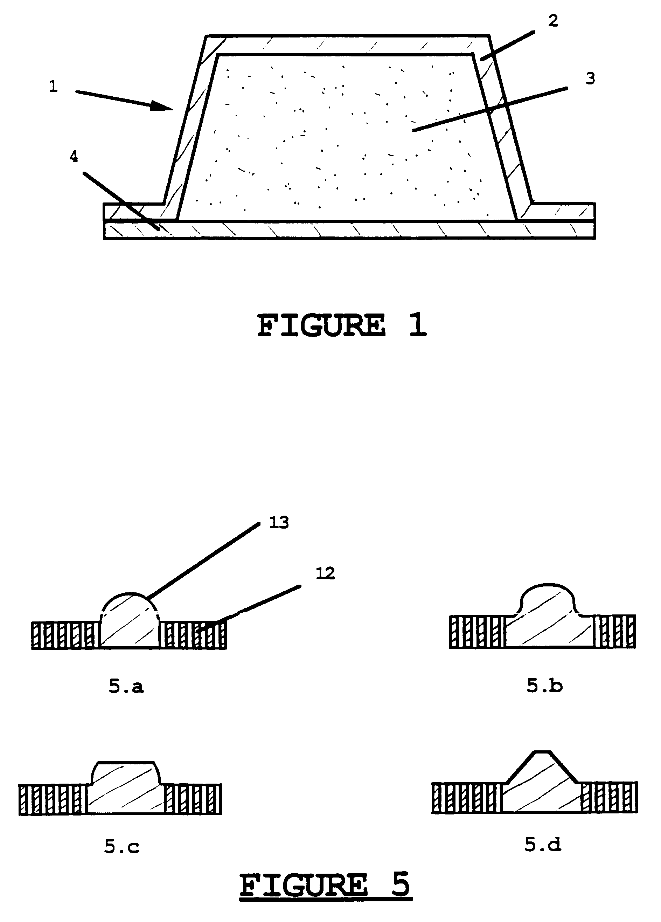

Fig. 1 est une représentation schématique de la cartouche à extraire,
Fig. 2 est une vue de dessus du porte-cartouche et de son support,
Fig. 3 est une coupe de la cartouche dans le dispositif d'extraction selon la ligne 3-3 de la Fig. 2,
Fig. 4 est une coupe du porte-cartouche et de son support selon la ligne 3-3 de la Fig. 2,
Fig. 5a à 5d sont des coupes des éléments radiaux selon la ligne 5-5 de la Fig. 2,
Fig. 6 est une coupe de la cartouche dans le dispositif d'extraction, selon un second mode de réalisation.
Fig. 7 est une coupe du porte-cartouche et de son support dans une autre forme de réalisation et Fig. 8 est une vue de dessus des éléments saillants utilisés dans le porte-cartouche selon la Fig. 7.
Fig. 9 est une représentation schématique en coupe de la cartouche dans le dispositif d'extraction selon un autre mode de réalisation et
Fig. 10 est une représentation agrandie du profil des éléments en relief et en creux du porte-cartouche de la Fig. 9.
Fig. 11 est une coupe du porte-cartouche dans une autre forme de réalisation et Fig. 12 est une coupe du dispositif selon l'invention pour l'extraction de cartouche ayant la forme tronconique inversée.

La cartouche (1) comporte une coupelle (2) de forme tronconique, remplie de café torréfié et moulu (3) et fermée par un opercule (4) soudé sur le rebord de la coupelle (2) et formant la face inférieure.

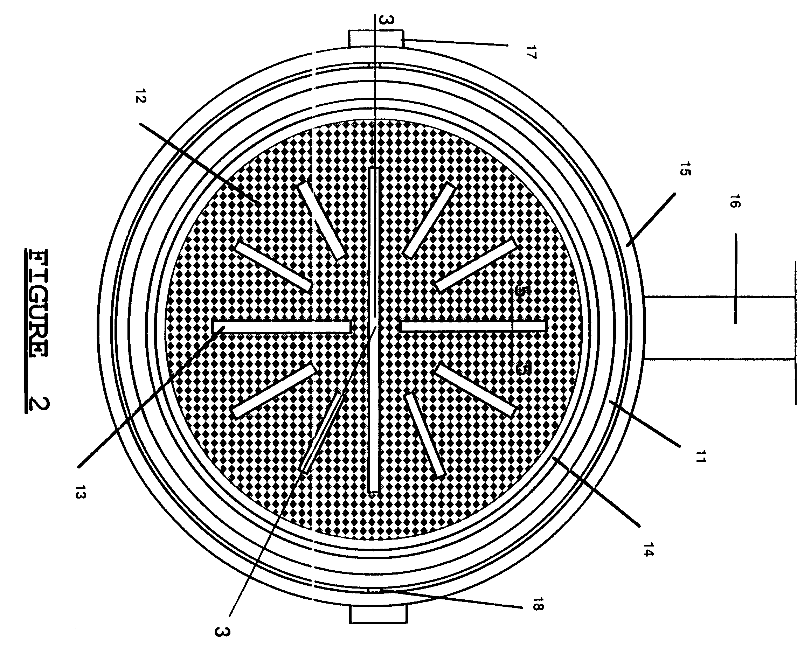

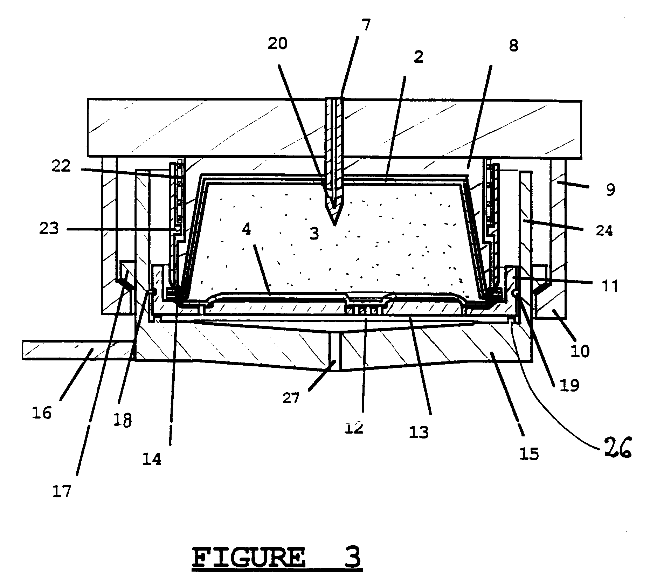

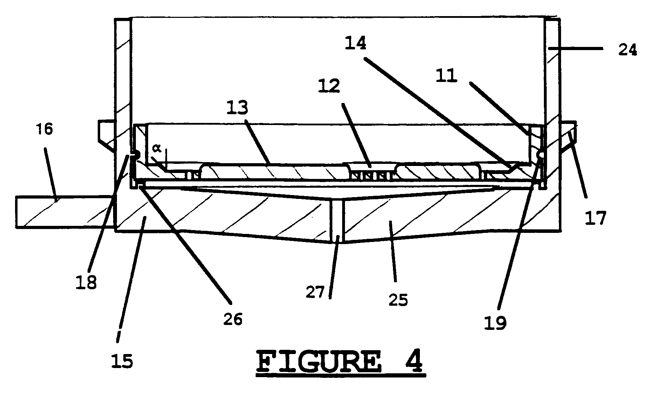

En référence aux Fig. 2 et 4, le porte-cartouche (11) est logé dans son support (15) comportant une poignée (16) et une paroi latérale (24) comportant deux pattes de serrage (17) diamétralement opposées et prévues pour s'engager sur les rampes de serrage (10) de la bague de serrage (9) (Fig. 3) et un alésage (27) pour le passage du café. Sur le fond (25) du support (24) est prévue une protubérance annulaire (26) sur laquelle repose le porte-cartouche (11) qui peut tourner dans son support grâce en outre aux deux ergots amovibles (18) coopérant avec la gorge (19) prévue dans ledit porte-cartouche. Le porte-cartouche (11) comporte une grille d'écoulement (12) avec des éléments saillants (13) et une bordure annulaire en biseau (14). Cette bordure fait un angle alpha avec la verticale.

En référence à la Fig. 3, le dispositif d'extraction comprend en outre un organe d'injection d'eau (7) percé d'orifices (20) orientés vers le haut et une pièce annulaire (8) avec un logement intérieur dont la forme épouse sensiblement la forme extérieure de la cartouche. Il est aussi préférable d'injecter l'eau sous la face supérieure vers le haut de manière à bien mouiller tout le lit de café. La pièce annulaire (8) comprend sur sa partie extérieure un ressort (22) maintenant une bague (23) pour le dégagement de la cartouche en fin d'extraction.

Le fonctionnement du dispositif est le suivant: on dispose la cartouche (1) dans le porte-cartouche (11). On engage ensuite le support (15) par ses pattes de serrage (17) sur les rampes de serrage (10) de la bague de serrage (9). L'organe d'injection d'eau (7) perce la face supérieure de la coupelle (2). La face inférieure (4) de la cartouche appuie sur les éléments radiaux (13) du porte-cartouche. La possibilité de rotation du porte-cartouche (11) dans son support (15) permet lors du serrage et du deserrage de la cartouche que celle-ci reste fixe par rapport au porte-cartouche, évitant ainsi tout risque d'endommagement de ladite cartouche.

L'eau est ensuite introduite par les orifices (20) de l'organe d'injection d'eau (7) et passe sur le lit de café (3). La pression monte dans la cartouche et la face inférieure (4) épouse de mieux en mieux la forme des éléments radiaux d'ouverture (13). Lorsqu'on atteint la tension de rupture du matériau de la face inférieure, il y a déchirure de ladite face le long des éléments radiaux. Le café s'écoule à travers la grille d'écoulement (12) et est récupéré sous l'alésage (27) dans un récipient (non représenté).

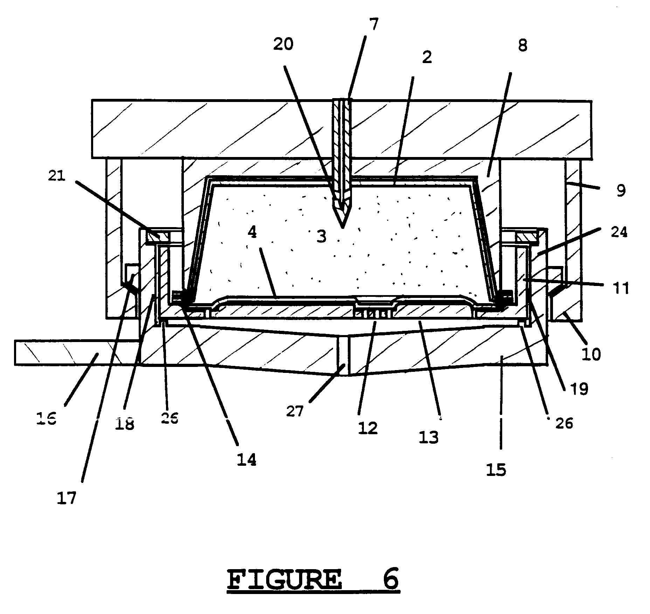

Les Fig. 5a à 5d montrent différentes sections des éléments radiaux (13). Sur la Fig. 6, les éléments identiques à ceux de la Fig. 3 ont été affectés des mêmes numéros de référence. Ce dispositif diffère de celui de la Fig. 3 uniquement sur les éléments participant à la mise en rotation du porte-cartouche (11) par rapport à son support (15). Le porte-cartouche est maintenu dans sa cavité de rotation à l'aide d'une bague (21), soudée ou sertie ou vissée sur le support après mise en place du porte-cartouche.

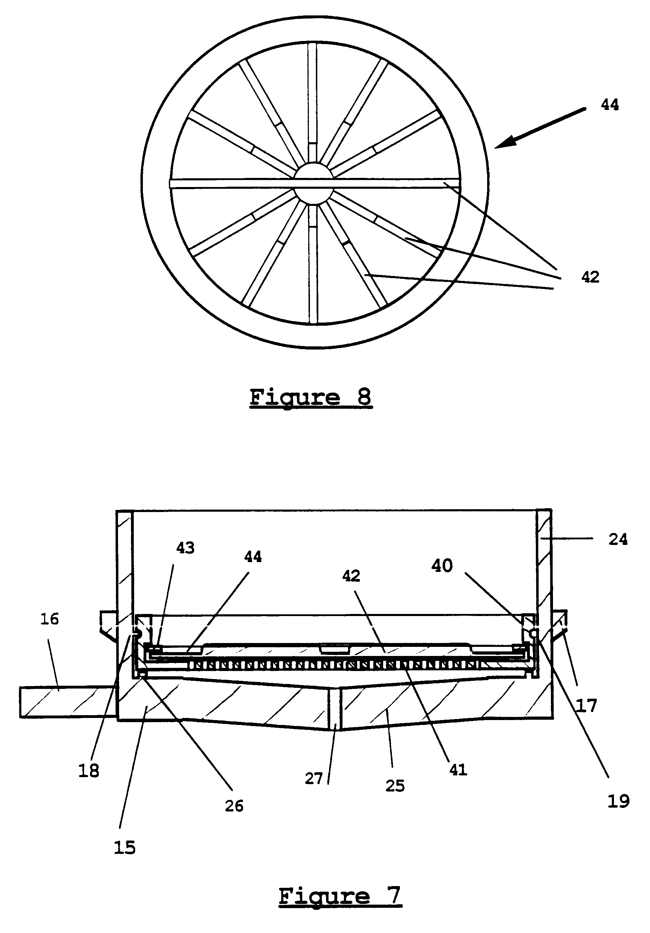

Selon la Fig. 7, le porte-cartouche (40) diffère de celui de la Fig. 4 en ce sens qu'il comprend une grille d'écoulement (41) et posée sur cette grille une bague (44) avec des éléments saillants (42) maintenue en place grâce à un anneau (43). La Fig. 8 montre plus précisément cette bague (44) avec les éléments saillants (42) disposés de façon radiale. La fonction d'ouverture est assurée dans les parties hautes de ces éléments saillants.

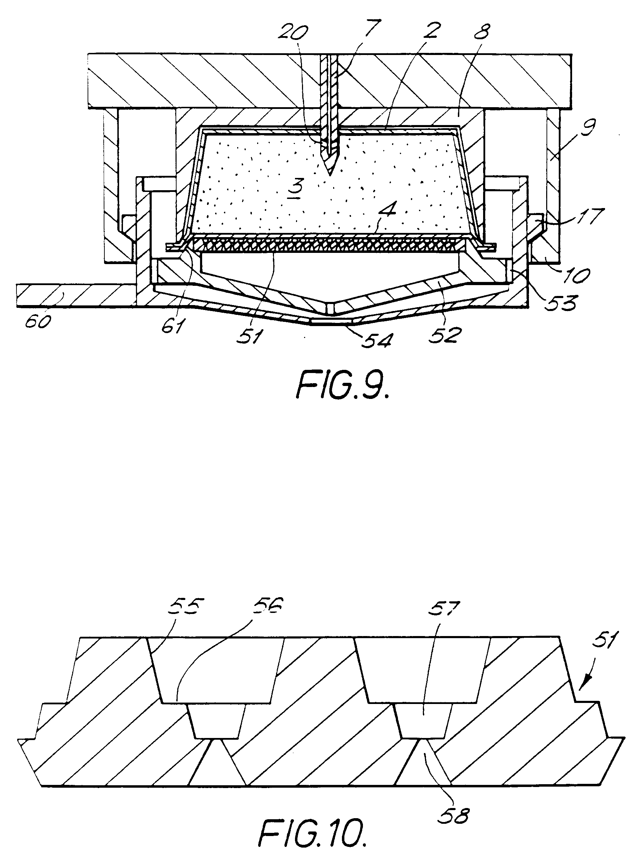

Sur la Fig. 9, les éléments identiques à ceux de la Fig. 6 ont été affectés des mêmes numéros de référence. Ce dispositif diffère de celui de la Fig. 6 par le porte-cartouche (60) formant une seule pièce avec le support dudit porte-cartouche. Le porte-cartouche comporte une plaquette (51) avec éléments en relief sous forme de pyramides et orifices de filtration, un cône de réception de café (52), des ouvertures (53) sur les bords pour l'évacuation du marc par un orifice auxiliaire (54). La partie annulaire (61) du porte-cartouche assure l'étanchéité en pinçant la bordure de la cartouche à extraire contre la partie inférieure de la pièce annulaire (8).

La Fig. 10 montre un détail en coupe de la plaquette (51). On y reconnaît les faces inclinées (55) des pyramides faisant un angle compris ente 10 et 30° avec la verticale, les zones en terrasse (56) et les canaux d'écoulement (57) comportant des orifices (58).

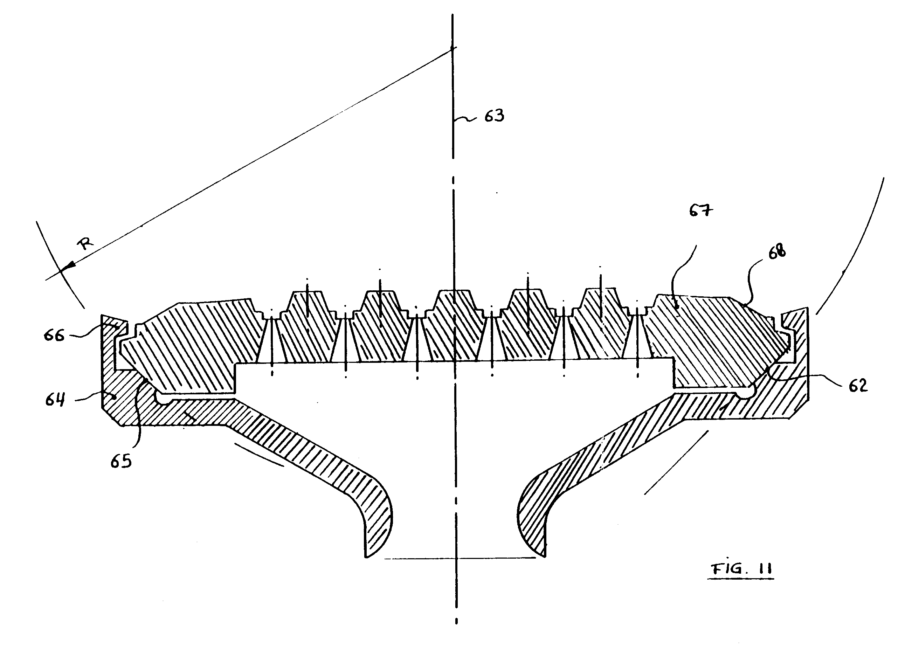

La Fig. 11 montre en coupe une forme de réalisation qui comporte un élément en relief (67) présentant une surface conique d'étanchéité (68) et une surface d'appui sphérique (62) dont le centre de courbure coïncide avec l'axe (63) perpendiculaire au plan de l'élément en relief, la pente de la tangente à cet anneau étant approximativement 45°. Un siège (64) comporte une surface d'appui sphérique (65) en contact avec celle correspondante de la pièce (67). Ce siège est solidaire du support de porte-cartouche (non représenté). Il est préférentiellement constitué d'un alliage ou d'une matière plastique injectée et comporte à sa périphérie des ergots (66) qui enserrent l'élément constituant la surface d'appui tout en laissant un jeu suffisant pour que ledit élément puisse tourner librement et s'incliner dans une mesure suffisante.

Par ailleurs, le support de porte-cartouche (non représenté) présente à l'endroit de sa fixation à la baïonnette un jeu radial suffisant pour permettre le centrage de l'ensemble malgré le décentrement de la pièce comportant le relief et le cône d'étanchéité lors de son mouvement de rotule.

Sur la Fig. 12, les éléments identiques à ceux de la Fig. 6 ont été affectés des mêmes numéros de référence. Ce dispositif diffère de celui de la Fig. 6 en ce sens qu'on extrait une cartouche tronconique inversée (70) et qu'il ne comporte pas de ce fait de pièce annulaire (8). Le porte-cartouche et le support de porte-cartouche forment une seule pièce (71). Le pourtour de la face supérieure (72) de la cartouche est pincée entre la tête d'extraction et la partie supérieure (75) du porte-cartouche. La face inférieure (73) de la cartouche appuie contre les éléments en relief (74) en forme de pyramide. Le fonctionnement est sensiblement le même que pour la Fig. 3. L'eau arrive par l'organe d'injection d'eau (7) et traverse le lit de café de la capsule. La pression dans la capsule monte et plaque la face (73) contre les éléments en relief (74). Lorsqu'on atteint la tension de rupture, il y a déchirure de la face (73) contre les pyramides (74) et le café s'écoule par les orifices (76), par le cône de réception de café (77) à travers l'orifice annulaire (78).

## Revendications

1. Procédé d'extraction de cartouches fermées (1) contenant au moins une substance pour la préparation d'une boisson dans un porte-cartouche, ladite cartouche comprenant une face d'extraction de préférence plane, dans lequel on injecte dans ladite cartouche un mélange d'eau et d'air à une pression comprise entre 1 et 20 bar, de manière à déformer la face d'extraction de la cartouche, caractérisé en ce que la déformation de la face d'extraction de la cartouche se fait contre une surface en relief du porte-cartouche (11, 40, 60) comportant des éléments en relief (13, 42, 55) et des creux, ladite face d'extraction se déchirant à l'emplacement de ces éléments en relief et/ou de ces creux en atteignant sa tension de rupture, pour permettre l'évacuation du liquide après extraction du café sous une pression de 1 à 20 bar.

2. Procédé selon la revendication 1 caractérisé par le fait que dès la rupture de la face d'extraction, l'écoulement est contrôlé par l'espace réduit obtenu entre les bords de la zone de rupture et les éléments en relief, cet espace réduit excluant notamment tout déplacement intempestif de la phase solide du contenu de la cartouche qui pourrait obstruer les orifices d'écoulement, perturber la régularité et amoindrir la reproductibilité du processus d'extraction.

3. Procédé selon l'une des revendications 1 ou 2 caractérisé par le fait que la pression d'extraction atteint, lorsque la perte de charge à travers le lit de substance est à son maximum, une valeur supérieure à la valeur initiale provoquant l'ouverture de la cartouche.

4. Procédé selon l'une des revendications 1 à 3, caractérisé en ce qu'on effectue l'extraction sur une cartouche ayant un lit de café d'une épaisseur comprise entre 10 et 30 mm.

5. Procédé selon l'une des revendications 1 à 4, caractérisé en ce qu'on injecte l'eau sous la face supérieure vers le haut de manière à bien mouiller tout le lit de café.

6. Dispositif pour la mise en oeuvre du procédé selon l'une des revendications 1 à 5, comprenant un organe d'injection d'eau et d'air (7) et un porte-cartouche (11, 40), caractérisé en ce qu'il comprend un support de porte-cartouche (15, 60) amovible, maintenu sous l'organe d'injection d'eau et d'air par des moyens de fixation et une pièce annulaire (8), le porte-cartouche étant disposé dans le support de porte-cartouche et comportant des éléments en relief (13, 42, 55) et en creux sur une grille d'écoulement (12, 41), la partie inférieure de la pièce annulaire (8) coopérant avec le pourtour (61) du porte-cartouche pour maintenir la cartouche (1) et l'étanchéité lors de l'extraction.

7. Dispositif pour la mise en oeuvre du procédé selon l'une des revendications 1 à 5, comprenant un organe d'injection d'eau (7), un porte-cartouche (71) amovible maintenu sous l'organe d'injection d'eau par des moyens de fixation, caractérisé en ce que le porte-cartouche (71) comporte des éléments en relief (74) et en creux sur une grille d'écoulement (76), la partie périphérique de l'organe d'injection d'eau coopérant avec le pourtour (75) du porte-cartouche pour maintenir la cartouche (70) et l'étanchéité lors de l'extraction.

8. Dispositif selon l'une des revendications 6 ou 7, caractérisé en ce que les moyens de fixation du support de porte-cartouche sont constitués par une bague de serrage (9) avec au moins deux rampes de serrage (10) coopérant avec au moins deux pattes de serrage (17) du support de porte-cartouche.

9. Dispositif selon l'une des revendications 6 ou 7, caractérisé en ce que les moyens de fixation du support de porte-cartouche et ledit support font partie intégrante d'un dispositif mécanique automatisé permettant la mise en place de la cartouche dans le porte-cartouche et le serrage et desserrage du porte-cartouche.

10. Dispositif selon la revendication 6, caractérisé en ce que la pièce annulaire (8) comporte sur sa partie extérieure un ressort (22) maintenant une bague (23) pour le dégagement de la cartouche en fin d'extraction.

11. Dispositif selon la revendication 6, caractérisé en ce que le pourtour du porte-cartouche comporte une bordure annulaire conique (14) en regard d'une partie conique correspondante sur la partie inférieure de la pièce annulaire.

12. Dispositif selon l'une des revendications 6 ou 7, caractérisé en ce que les éléments en relief sont constitués par de petites baguettes rectilignes (13), légèrement sinueuses ou sous forme d'arc, dispersées de façon radiale, concentrique, parallèle ou perpendiculaire.

13. Dispositif selon l'une des revendications 6 ou 7, caractérisé en ce que les éléments en relief ont une section semi-circulaire, conique ou tronconique et un diamètre compris entre 0,5 et 5 mm.

14. Dispositif selon l'une des revendications 6 ou 7, caractérisé par le fait que l'élément en relief (55) comporte des formes pyramidales munies de terrasses (56), de canaux et d'orifices d'écoulement (58), ces formes étant conçues de manière à ce que les bords déchirés de la face d'extraction de la cartouche prennent appui sur lesdites terrasses, retenant le produit contenu dans la cartouche tout en laissant s'écouler l'infusion.

15. Dispositif selon la revendication 6, caractérisé en ce que le porte-cartouche est monté à rotation dans son support.

16. Dispositif selon l'une des revendications 6 ou 7, caractérisé en ce que la grille d'écoulement (12, 58) a des ouvertures de diamètre compris entre 0,2 et 0,5 mm.

17. Dispositif selon l'une des revendications 6 ou 7, caractérisé par le fait que le porte-cartouche présente à sa périphérie extérieure au moins une ouverture permettant à des produits de dégorgement de la cartouche de s'écouler selon un cheminement différent de celui de l'infusion.

18. Dispositif selon l'une des revendication 6 ou 7 caractérisé par le fait que le porte-cartouche présente dans sa zone périphérique au profil assurant l'étanchéité un état de surface et/ou des arêtes favorisant le frottement contre le bord extérieur de la cartouche de manière à entraîner ladite cartouche lorsque ledit porte-cartouche est du type à baïonnette.

19. Dispositif selon l'une des revendications 6 ou 7, caractérisé par la présence sous la pièce comportant le relief et les ouvertures de passage de l'infusion d'au moins un cône pouvant être muni d'ouvertures mettant l'intérieur de ce cône en communication avec l'air extérieur.

20. Dispositif selon l'une des revendications 6 ou 7, caractérisé en ce que les éléments en relief (13, 42, 55) et en creux et la grille d'écoulement (12, 58) forment une seule pièce.

21. Dispositif selon l'une des revendications 6 ou 7, caractérisé en ce que les éléments en relief (13, 42, 55) et en creux forment une pièce en soi disposée sur la grille d'écoulement (12, 58).

22. Dispositif selon la revendication 6, caractérisé en ce qu'il forme une seule pièce avec le support de porte-cartouche (15, 60).

23. Dispositif selon la revendication 6, caractérisé par le fait que le porte-cartouche est constitué d'au moins une pièce mobile dont la surface de contact avec le support de porte-cartouche est sphérique, permettant simultanément une rotation et une inclinaison.

24. Dispositif selon l'une des revendication 6 ou 7, caractérisé en ce que le pourtour du porte-cartouche comporte une bordure annulaire conique.

## Claims

1. A process for extracting sealed cartridges (1) containing at least one substance for the preparation of a beverage in a cartridge holder, the cartridge comprising a preferably flat extraction face, in which a mixture of water and air is injected into the cartridge under a pressure of 1 to 20 bar to deform the extraction face of the cartridge, characterized in that the extraction face of the cartridge is deformed against a relief surface of the cartridge holder (11,40,60) comprising relief elements (13,42,55) and recessed elements, the extraction face tearing at the location of these relief elements and/or these recesses on reaching its breaking stress to enable the liquid to be subsequently removed after extraction of the coffee under a pressure of 1 to 20 bar.

2. A process as claimed in claim 1, characterized in that, when the extraction face ruptures, flow is controlled by the reduced space obtained between the edges of the rupture zone and the relief elements, this reduced space excluding above all any inadvertent displacement of solid phase from the contents of the cartridge which could obstruct the flow orifices, disturb regularity and adversely affect the reproducibility of the extraction process.

3. A process as claimed in claim 1 or 2, characterized in that, when the loss of pressure through the layer of coffee is at its maximum, the extraction pressure reaches a value above the initial value responsible for opening of the cartridge.

4. A process as claimed in any of claims 1 to 3, characterized in that the cartridge to be extracted is a cartridge containing a 10 to 30 mm thick layer of coffee.

5. A process as claimed in any of claims 1 to 4, characterized in that the water is injected upwards beneath the upper face in order thoroughly to wet the entire layer of coffee.

6. A system for carrying out the process claimed in any of claims 1 to 5, comprising an injector (7) for water and air and a cartridge holder (11,40), characterized in that it comprises a removable cartridge holder support (15,60) held beneath the water/air injector by fixing means and an annular element (8), the cartridge holder being disposed in the cartridge holder support and comprising relief elements (13,42,55) and recessed elements on a flow grill (12,41), the lower part of the annular element (8) cooperating with the periphery (61) of the cartridge holder to hold the cartridge (1) in place and to ensure fluid tightness during the extraction process.

7. A system for carrying out the process claimed in any of claims 1 to 5 comprising a water injector (7), a removable cartridge holder support (71) held beneath the water injector by fixing means, characterized in that the cartridge holder comprises relief elements (74) and recessed elements on a flow grill (76), the peripheral part of the water injector cooperating with the periphery (75) of the cartridge holder to hold the cartridge (70) in place and to ensure fluid tightness during extraction.

8. A system as claimed in claim 6 or 7, characterized in that the means for fixing the support of the cartridge holder are in the form of a retaining collar (9) with at least two retaining ramps (10) cooperating with at least two fastening lugs (17) of the cartridge holder support.

9. A system as claimed in claim 6 or 7, characterized in that the means for fixing the support of the cartridge holder and the support itself are an integral part of an automated mechanical unit for introducing the cartridge into the cartridge holder and for locking and unlocking the cartridge holder.

10. A System as claimed in claim 6, characterized in that, on its outer part, the annular element (8) comprises a spring (22) holding a ring (23) for releasing the cartridge on completion of extraction.

11. A system as claimed in claim 6, characterized in that the periphery of the cartridge holder comprises a conical annular rim (14) opposite a corresponding conical part on the lower part of the annular element.

12. A cartridge holder as claimed in claim 6 or 7, characterized in that the relief elements are in the form of rectilinear, slightly sinuous or arcuate rodlets (13) arranged radially, concentrically, parallel or perpendicularly.

13. A cartridge holder as claimed in claim 6 or 7, characterized in that the relief elements have a semicircular, conical or frustoconical cross-section and a diameter of 0.5 to 5 mm.

14. A cartridge holder as claimed in claim 6 or 7, characterized in that the relief element (55) is pyramidal in shape with ledges (56), flow channels and flow orifices (58), this shape being designed to ensure that the torn edges of the extraction face of the cartridge bear on the ledges, retaining the product accommodated in the cartridge while allowing the infusion to flow.

15. A cartridge holder as claimed in claim 6, characterized in that the cartridge holder is mounted for rotation in its support.

16. A cartridge holder as claimed in claim 6 or 7, characterized in that the flow grill (12,58) has openings between 0.2 and 0.5 mm in diameter.

17. A cartridge holder as claimed in claim 6 or 7, characterized in that, at its outer periphery, the cartridge holder has at least one opening which allows the products discharged from the cartridge to flow along a path different from that of the infusion.

18. A cartridge holder as claimed in claim 6 or 7, characterized in that, in its zone peripheral to the profile responsible for fluid tightness, the cartridge holder has a surface texture and/or ridges which promote friction against the outer edge of the cartridge so as to entrain the cartridge when the cartridge holder is of the bayonet type.

19. A cartridge holder as claimed in claim 6 or 7, characterized by the presence beneath the element comprising the relief and the openings for the passage of the infusion of at least one cone which can be formed with openings through which the interior of the cone can communicate with the outside atmosphere.

20. A cartridge holder as claimed in claim 6 or 7, characterized in that the relief elements (13,42,55) and recessed elements and the flow grill (12,58) are in one piece.

21. A cartridge holder as claimed in claim 6 or 7, characterized in that the relief elements (13,42,55) and recessed elements are in one piece and are arranged on the flow grill (12,58).

22. A cartridge holder as claimed in claim 6, characterized in that it is in one piece with the support of the cartridge holder (15,60).

23. A cartridge holder as claimed in claim 6, characterized in that the cartridge holder consists of at least one moving part of which the surface in contact with the support of the cartridge holder is spherical to allow simultaneous rotation and inclination.

24. A cartridge holder as claimed in claim 6 or 7, characterized in that the periphery of the cartridge holder has a conical annular rim.

## Patentansprüche

1. Verfahren zur Extraktion von geschlossenen Portionspakkungen (1), die mindestens eine Substanz zur Zubereitung eines Getränks in einem Portionspackungsträger enthalten und eine vorzugsweise ebene Extraktionsseite aufweisen, in welchem man in diese Portionspackung eine Mischung von Wasser und Luft mit einem Druck zwischen 1 und 20 bar einspritzt, so daß die Extraktionsseite der Portionspackung verformt wird, dadurch gekennzeichnet, daß die Verformung der Extraktionsseite der Portionspackung an einer erhabenen Fläche des Portionspackungsträgers (11, 40, 60) stattfindet, die erhabene Elemente (13, 42, 55) und Vertiefungen aufweist, wobei diese Extraktionsseite an der Stelle dieser erhabenen Elemente und/oder dieser Vertiefungen reißt, wenn sie ihre Bruchspannung erreicht, um die Abfuhr der Flüssigkeit nach Extraktion des Kaffees unter einem Druck von 1 bis 20 bar zu gestatten.

2. Verfahren nach Anspruch 1, dadurch gekennzeichnet, daß die Strömung, sobald die Extraktionsseite reißt, durch den zwischen den Rändern des Bruchbereichs und den erhabenen Elementen erhaltenen reduzierten Raum gesteuert ist, wobei dieser reduzierte Raum insbesondere jede ungewollte Bewegung der festen Phase des Inhalts der Portionspackung ausschließt, der die Ablauföffnungen verstopfen, die Regelmäßigkeit stören und die Reproduzierbarkeit des Extraktionsprozesses mindern könnte.

3. Verfahren nach einem der Ansprüche 1 oder 2, dadurch gekennzeichnet, daß der Extraktionsdruck, wenn der Druckabfall über das Substanzbett maximal ist, einen Wert erreicht, der über dem Anfangswert liegt, der die Öffnung der Portionspackung bewirkt.

4. Verfahren nach einem der Ansprüche 1 bis 3, dadurch gekennzeichnet, daß man die Extraktion an einer Portionspakkung vornimmt, die ein Kaffeebett mit einer Dicke zwischen 10 und 30 mm hat.

5. Verfahren nach einem der Ansprüche 1 bis 4, dadurch gekennzeichnet, daß man Wasser unter die obere Seite nach oben einspritzt, so daß das ganze Kaffeebett gut benetzt wird.

6. Vorrichtung zur Durchführung des Verfahrens nach einem der Ansprüche 1 bis 5, die ein Organ (7) zum Einspritzen von Wasser und Luft und einen Portionspackungsträger (11, 40) aufweist, dadurch gekennzeichnet, daß sie einen abnehmbaren Portionspackungsträger-Halter (15, 60) aufweist, der unter dem Organ zum Einspritzen von Wasser und Luft durch Befestigungsmittel und ein ringförmiges Teil (8) gehalten ist, wobei der Portionspackungsträger in dem Portionspakkungsträger-Halter angeordnet ist und erhabene Elemente (13, 42, 55) und Vertiefungen auf einem Ablaufrost (12, 41) aufweist, wobei der untere Teil des ringförmigen Teils (8) mit dem Umfang (61) des Portionspackungsträgers zusammenwirkt, um die Portionspackung (1) zu halten und die Abdichtung bei der Extraktion aufrechtzuerhalten.

7. Vorrichtung zur Durchführung des Verfahrens nach einem der Ansprüche 1 bis 5, die ein Organ (7) zum Einspritzen von Wasser und einen abnehmbaren Portionspackungsträger (71) aufweist, der unter dem Organ zum Einspritzen von Wasser durch Befestigungsmittel gehalten ist, dadurch gekennzeichnet, daß der Portionspackungsträger (71) erhabene Elemente (74) und Vertiefungen auf einem Ablaufrost (76) aufweist, wobei der Umfangsteil des Organs zum Einspritzen von Wasser mit dem Umfang (75) des Portionspackungsträgers zusammenwirkt, um bei der Extraktion die Portionspackung (70) zu halten und die Abdichtung aufrechtzuerhalten.

8. Vorrichtung nach einem der Ansprüche 6 oder 7, dadurch gekennzeichnet, daß die Befestigungsmittel des Portionspakkungsträger-Halters aus einem Klemmring (9) mit mindestens zwei Klemmrampen (10) bestehen, die mit mindestens zwei Klemmlappen (17) des Portionspackungsträger-Halters zusammenwirken.

9. Vorrichtung nach einem der Ansprüche 6 oder 7, dadurch gekennzeichnet, daß die Befestigungsmittel des Portionspakkungsträger-Halters und dieser Halter integrierenden Bestandteil einer automatisierten mechanischen Vorrichtung bilden, die das Einsetzen der Portionspackung in den Portionspackungsträger und das Anziehen und Lösen des Portionspackungsträgers gestattet.

10. Vorrichtung nach Anspruch 6, dadurch gekennzeichnet, daß das ringförmige Teil (8) an seinem äußeren Teil eine Feder (22) aufweist, die einen Ring (23) zum Ausrücken der Portionspackung nach Extraktion hält.

11. Vorrichtung nach Anspruch 6, dadurch gekennzeichnet, daß der Umfang des Portionspackungsträgers eine konische ringförmige Umrandung (14) gegenüber einem entsprechenden konischen Teil an dem unteren Teil des ringförmigen Teils aufweist.

12. Vorrichtung nach einem der Ansprüche 6 oder 7, dadurch gekennzeichnet, daß die erhabenen Elemente aus kleinen geradlinigen Stäben (13) bestehen, die leicht gewunden oder bogenförmig sind und radial, konzentrisch, parallel oder senkrecht zueinander verteilt sind.

13. Vorrichtung nach einem der Ansprüche 6 oder 7, dadurch gekennzeichnet, daß die erhabenen Elementen einen halbkreisförmigen, konischen oder kegelstumpfförmigen Querschnitt und einen Durchmesser zwischen 0,5 und 5 mm haben.

14. Vorrichtung nach einem der Ansprüche 6 oder 7, dadurch gekennzeichnet, daß das erhabenen Element (55) Pyramidenformen mit Terrassen (56), Kanälen und Ablauföffnungen (58) aufweist, wobei diese Formen so beschaffen sind, daß die zerrissenen Ränder der Extraktionsseite der Portionspackung auf diesen Terrassen aufliegen, wobei sie das in der Portionspackung enthaltene Produkt zurückhalten und gleichzeitig die Infusion abfließen lassen.

15. Vorrichtung nach Anspruch 6, dadurch gekennzeichnet, daß der Portionspackungsträger in seinem Halter drehbar montiert ist.

16. Vorrichtung nach einem der Ansprüche 6 oder 7, dadurch gekennzeichnet, daß der Ablaufrost (12, 58) Öffnungen mit einem Durchmesser zwischen 0,2 und 0,5 mm hat.

17. Vorrichtung nach einem der Ansprüche 6 oder 7, dadurch gekennzeichnet, daß der Portionspackungsträger an seinem Außenumfang mindestens eine Öffnung aufweist, die das Abfließen von Überlaufprodukten der Portionspackung auf einem anderen Weg als dem der Infusion gestattet.

18. Vorrichtung nach einem der Ansprüche 6 oder 7, dadurch gekennzeichnet, daß der Portionspackungsträger in seinem am Umfang des Profils gelegenen Bereich, der die Abdichtung gewährleistet, einen Oberflächenzustand und/oder Kanten besitzt, die die Reibung am Außenrand der Portionspackung verstärken, so daß die Portionspackung mitgenommen wird, wenn der Portionspackungsträger vom Bajonnett-Typ ist.

19. Vorrichtung nach einem der Ansprüche 6 oder 7, dadurch gekennzeichnet, daß unter dem Teil, das das Relief und die Öffnungen zum Durchgang der Infusion aufweist, mindestens ein Kegel vorgesehen ist, der mit Öffnungen versehen sein kann, die das Innere dieses Kegels mit der Außenluft in Verbindung setzen.

20. Vorrichtung nach einem der Ansprüche 6 oder 7, dadurch gekennzeichnet, daß die erhabenen Elemente (13, 42, 55) und die Vertiefungen und der Ablaufrost (12, 58) ein einziges Teil bilden.

21. Vorrichtung nach einem der Ansprüche 6 oder 7, dadurch gekennzeichnet, daß die erhabenen Elemente (13, 42, 55) und die Vertiefungen ein Teil für sich bilden, das auf dem Ablaufrost (12, 58) angeordnet ist.

22. Vorrichtung nach Anspruch 6, dadurch gekennzeichnet, daß sie mit dem Portionspackungsträger-Halter (15, 60) ein einziges Stück bildet.

23. Vorrichtung nach Anspruch 6, dadurch gekennzeichnet, daß der Portionspackungsträger aus mindestens einem beweglichen Teil gebildet ist, dessen Kontaktfläche mit dem Portionspackungshalter-Träger kugelförmig ist und gleichzeitig eine Drehung und eine Neigung gestattet.

24. Vorrichtung nach einem der Ansprüche 6 oder 7, dadurch gekennzeichnet, daß der Umfang des Portionspackungsträgers einen konischen ringförmigen Rand aufweist.
